# EUROPEAN PATENT APPLICATION

(11) **EP 4 629 464 A1**
(43) Date of publication of application: **08.10.2025**
(21) Application number: 25168009.6
(22) Date of filing: 02.04.2025
(51) Int. Cl.: H02J 3/01, H02J 3/38, H02M 1/12, H02M 1/00, H02M 3/158, H02M 7/5387

(54) **POWER CONVERTER, CONTROL METHOD, AND PHOTOVOLTAIC ENERGY STORAGE SYSTEM**

(30) Priority: 03.04.2024 CN 202410408777
(71) Applicant: Huawei Digital Power Technologies Co., Ltd., Shenzhen, Guangdong 518043 (CN)
(72) Inventor: FENG, Yupeng, Shenzhen, 518043 (CN); LIAO, Weichao, Shenzhen, 518043 (CN); CHEN, Aitang, Shenzhen, 518043 (CN); ZHANG, Fenggang, Shenzhen, 518043 (CN); WANG, Gang, Shenzhen, 518043 (CN)
(74) Representative: Epping - Hermann - Fischer

(57) **Abstract**

This application provides a power converter, a control method, and a photovoltaic energy storage system, applied to the field of photovoltaic energy storage technologies, to reduce a voltage total harmonic distortion of a load voltage while current limiting is performed on a load current. The power converter includes an inverter circuit and a controller. A direct current end of the inverter circuit is configured to connect to a direct current power supply, and an alternating current end of the inverter circuit is configured to supply an alternating current to a load. When the power converter operates, and when an output current output from any one phase output end of the inverter circuit to the load is greater than or equal to a preset current, the controller reduces an output voltage output from the corresponding one phase output end of the inverter circuit to the load. In a single power frequency period, a reduced output voltage of the corresponding one phase output end of the inverter circuit is k times the output voltage before the reduction, and 0<k<1. Based on this, a type of a waveform of an output voltage of the inverter circuit in each power frequency period does not change, and the voltage total harmonic distortion of the load voltage can be reduced while the load current is reduced.

## Description

### TECHNICAL FIELD

This application relates to the field of photovoltaic energy storage technologies, and in particular, to a power converter, a control method, and a photovoltaic energy storage system.

### BACKGROUND

A photovoltaic power station is a new energy power station that develops rapidly recently. In the photovoltaic power station, a photovoltaic energy storage system having a direct current power supply, for example, a photovoltaic module and an energy storage battery, is widely used. In this type of photovoltaic energy storage system, a direct current of the photovoltaic module and the energy storage battery may be converted into an alternating current via a power converter to supply power to a load. According to different connection relationships with a power grid, the existing photovoltaic energy storage system may be classified into an off-grid photovoltaic energy storage system, a grid-connected photovoltaic energy storage system, a hybrid photovoltaic energy storage system, and the like. In the off-grid photovoltaic energy storage system, an alternating current output by an inverter circuit is mainly used to supply power to a load. When a load current is excessively high, the inverter circuit in a power converter may cause an excessively high current of a device, for example, a switching transistor with a three-phase bridge arm, due to overload operation, and consequently the device is easily damaged. To ensure that an output current of the inverter circuit does not exceed a current stress of the inverter circuit itself, the load current needs to be reduced, to perform current limiting protection on the inverter circuit. In a current solution, when the load current is reduced, current limiting is performed by clipping a peak of a load voltage. However, a voltage total harmonic distortion of the load voltage easily increases in this manner, resulting in damage to the load.

### SUMMARY

Embodiments of this application provide a power converter, a control method, and a photovoltaic energy storage system, to reduce a voltage total harmonic distortion of a load voltage while current limiting is performed on a load current.

To achieve the foregoing objectives, embodiments of this application provide the following technical solutions.

According to a first aspect, a power converter is provided. The power converter includes an inverter circuit and a controller. A direct current end of the inverter circuit is configured to connect to a direct current power supply, and an alternating current end of the inverter circuit is configured to supply an alternating current to a load. When the power converter operates, and when an output current output from any one phase output end of the inverter circuit to the load is greater than or equal to a preset current, the controller may reduce an output voltage output from the corresponding one phase output end of the inverter circuit to the load. In a single power frequency period, a reduced output voltage of the corresponding one phase output end of the inverter circuit is k times the output voltage before the reduction, and 0<k<1. It is well known that when a load current is excessively large, current limiting is performed on the load current by reducing the output voltage of the inverter circuit. However, in an existing solution, the load current is usually reduced by clipping a peak of a load voltage. When the load current is reduced by clipping the peak of the load voltage, if an original waveform of the load voltage of the inverter circuit in each power frequency period is a sine wave, a waveform of a load voltage obtaining by clipping the peak of the load voltage in each power frequency period is approximately a trapezoid wave. This inevitably leads to a large voltage total harmonic distortion of the load voltage. When the load current of the power converter provided in this embodiment of this application is excessively large, the controller may reduce the output voltage of the corresponding one phase output end of the inverter circuit, so that the output voltage of the corresponding one phase output end of the inverter circuit in the single power frequency period is the k times the output voltage before the reduction. Based on this, a type of a waveform of an output voltage of the inverter circuit in each power frequency period does not change, so that a type of the waveform of the load voltage does not change either. Therefore, the voltage total harmonic distortion of the load voltage can be reduced while the load current is reduced.

In a possible implementation, in response to the output current output from the any one phase output end of the inverter circuit to the load being greater than or equal to the preset current, in a process of reducing the output voltage output from the corresponding one phase output end of the inverter circuit to the load, and when the output current output from the any one phase output end of the inverter circuit to the load is greater than or equal to the preset current and reaches a specified value, the controller may reduce, based on a first preset gradient difference, the output voltage output from the corresponding one phase output end of the inverter circuit to the load. In this manner, when the output current output from the any one phase output end of the inverter circuit to the load is greater than or equal to the preset current and reaches the specified value, the controller may reduce the output voltage of the inverter circuit in a hysteresis control manner based on the first preset gradient difference, thereby improving stability of a regulation process.

In a possible implementation, in response to the output current output from the any one phase output end of the inverter circuit to the load being less than the preset current, the controller may further increase, based on a second preset gradient difference, the output voltage output from the corresponding one phase output end of the inverter circuit to the load. In the foregoing manner, the controller may increase the output voltage of the inverter circuit in a hysteresis control manner based on the second preset gradient difference, thereby improving stability of the regulation process.

In a possible implementation, a ratio of the reduced output voltage of the corresponding one phase output end of the inverter circuit to the output voltage before the reduction is a ratio of a current of the corresponding one phase output end of the inverter circuit before the reduction to a rated output current of the inverter circuit. In the foregoing manner, the output voltage of the inverter circuit can be reduced more accurately.

In a possible implementation, the reduced output voltage of the corresponding one phase output end of the inverter circuit is greater than or equal to a minimum operating voltage of the load. Based on this, current limiting protection can be performed on the inverter circuit while normal running of the load is ensured.

In a possible implementation, in response to output currents output from any two phase output ends of the inverter circuit to the load being greater than or equal to the preset current, the controller may further reduce output voltages output from the corresponding two phase output ends of the inverter circuit to the load. In the foregoing manner, when the output currents output from the any two phase output ends of the inverter circuit to the load are greater than or equal to the preset current, the controller may simultaneously reduce output voltages output from the corresponding two phase output ends to the load, to better reduce the voltage total harmonic distortion of the load voltage while the load current is reduced.

In a possible implementation, in response to all output currents output from three phase output ends of the inverter circuit to the load being greater than or equal to the preset current, the controller may further reduce output voltages output from the three phase output ends of the inverter circuit to the load. In the foregoing manner, when all the output currents output from the three phase output ends of the inverter circuit to the load are greater than or equal to the preset current, the controller may simultaneously reduce output voltage output from the three phase output ends to the load, to better reduce the voltage total harmonic distortion of the load voltage while the load current is reduced.

According to a second aspect, a control method is provided. The control method may be applied to the foregoing power converter. The power converter includes an inverter circuit and a controller. A direct current end of the inverter circuit is configured to connect to a direct current power supply, and an alternating current end of the inverter circuit is configured to supply an alternating current a load. When the foregoing control method is performed, and when an output current output from any one phase output end of the inverter circuit in the power converter to the load is greater than or equal to a preset current, the controller may reduce an output voltage output from the corresponding one phase output end of the inverter circuit to the load, where in a single power frequency period, a reduced output voltage of the corresponding one phase output end of the inverter circuit is k times the output voltage before the reduction, and 0<k<1.

In a possible implementation, when the output current output from the any one phase output end of the inverter circuit to the load is greater than or equal to the preset current, in a process of reducing the output voltage output from the corresponding one phase output end of the inverter circuit to the load, and when the output current output from the any one phase output end of the inverter circuit to the load is greater than or equal to the preset current and reaches a specified value, the controller may reduce, based on a first preset gradient difference, the output voltage output from the corresponding one phase output end of the inverter circuit to the load.

In a possible implementation, when the output current output from the any one phase output end of the inverter circuit to the load is less than the preset current, the controller may further increase, based on a second preset gradient difference, the output voltage output from the corresponding one phase output end of the inverter circuit to the load.

In a possible implementation, a ratio of the reduced output voltage of the corresponding one phase output end of the inverter circuit to the output voltage before the reduction is a ratio of a current of the corresponding one phase output end of the inverter circuit before the reduction to a rated output current of the inverter circuit.

In a possible implementation, the reduced output voltage of the corresponding one phase output end of the inverter circuit is greater than or equal to a minimum operating voltage of the load.

In a possible implementation, the method further includes: in response to output currents output from any two phase output ends of the inverter circuit to the load being greater than or equal to the preset current, reducing output voltages output from the corresponding two phase output ends of the inverter circuit to the load.

In a possible implementation, the method further includes: in response to all output currents output from three phase output ends of the inverter circuit to the load being greater than or equal to the preset current, reducing output voltages output from the three phase output ends of the inverter circuit to the load.

According to a third aspect, a photovoltaic energy storage system is provided. The photovoltaic energy storage system includes an energy storage battery and a power converter. The energy storage battery is connected to a direct current end of the power converter, and an alternating current end of the power converter is configured to supply an alternating current to a load. The direct current end of the power converter may be further configured to connect to a photovoltaic module. The power converter includes an inverter circuit and a controller. A direct current end of the inverter circuit is configured to connect to the energy storage battery, and an alternating current end of the inverter circuit is configured to supply an alternating current to the load. When the power converter operates, and when an output current output from any one phase output end of the inverter circuit to the load is greater than or equal to a preset current, the controller may reduce an output voltage output from the corresponding one phase output end of the inverter circuit to the load. In a single power frequency period, a reduced output voltage of the corresponding one phase output end of the inverter circuit is k times the output voltage before the reduction, and 0<k<1.

For technical principles and beneficial effects of the second aspect and the third aspect, refer to related descriptions of the first aspect. Details are not described herein again.

### BRIEF DESCRIPTION OF DRAWINGS

FIG. 1 is a diagram of a topology structure of an off-grid photovoltaic energy storage system;
FIG. 2 is a diagram of a topology structure of a power converter according to an embodiment of this application;
FIG. 3 is a diagram of a waveform of a load voltage whose peak is clipped to perform current limiting according to an embodiment of this application;
FIG. 4 is a schematic flowchart of a control method of a power converter according to an embodiment of this application;
FIG. 5 is a diagram of a waveform change of a load voltage according to an embodiment of this application;
FIG. 6 is a diagram of another waveform change of a load voltage according to an embodiment of this application; and
FIG. 7 is a diagram of still another waveform change of a load voltage according to an embodiment of this application.

### DESCRIPTION OF EMBODIMENTS

The following describes the technical solutions in embodiments of this application with reference to the accompanying drawings in embodiments of this application.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural. In addition, in embodiments of this application, terms such as "first" and "second" do not limit a quantity or an execution sequence.

It should be noted that in this application, terms such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner. Terms such as "connection" and "coupling" in embodiments of this application should be understood in a broad sense. For example, the term may refer to a physical direct connection, or may refer to an indirect connection implemented through an electronic component, for example, a connection implemented through a resistor, an inductor, a capacitor, or another electronic component.

For ease of understanding embodiments of this application, the following first describes technologies and terms in embodiments of this application.

A balanced load is a three-phase balanced alternating-current load in a process of supplying power to the load. In specific implementation, three phases of alternating currents are used to supply power for the alternating-current load. When the currents of the three phases are consistent, in other words, currents of a phase A, a phase B, and a phase C are equal, the three phases are balanced. Three-phase balancing makes a current on a zero wire or a neutral wire N to be zero.

An unbalanced load is a three-phase unbalanced alternating-current load in a process of supplying power to the load. In specific implementation, three phases of alternating currents are used to supply power for the alternating-current load. When the currents of the three phases are inconsistent, in other words, currents of a phase A, a phase B, and a phase C are not equal, the three-phase are unbalanced. Three-phase unbalancing makes a current on a zero wire or a neutral wire N to be not zero.

A power frequency period is time required for an alternating current to complete a complete fluctuation in one period, that is, time required for a current or a voltage to undergo a complete sine change.

The following describes this application in detail with reference to the accompanying drawings and embodiments.

With development of photovoltaic technologies, a photovoltaic power generation technology gradually matures, and an installed capacity also increases rapidly. However, a photovoltaic power generation system has problems such as a large output power fluctuation. If a power output by the photovoltaic power generation system is directly output to a power grid or a load without being processed, stable running of the power grid or the load may be affected. A photovoltaic energy storage system in which direct current power supplies of types such as a photovoltaic module and an energy storage battery are combined can effectively alleviate a fluctuation generated by the output power. Therefore, the photovoltaic energy storage system is widely used in photovoltaic power generation systems of various photovoltaic power stations. In the photovoltaic energy storage system, when energy output by the photovoltaic module is excessively large, the energy storage battery may be charged, thereby reducing a total output power and avoiding a waste of energy. When the energy of the photovoltaic module is insufficient, the energy storage battery can be controlled to discharge to ensure smooth total power outputting. According to different connection relationships with the power grid, the current photovoltaic energy storage system may be classified into an off-grid photovoltaic energy storage system, a grid-connected photovoltaic energy storage system, a hybrid photovoltaic energy storage system, and the like. The off-grid photovoltaic energy storage system is not connected to the power grid, and the system supplies power only to a load. The grid-connected photovoltaic energy storage system needs to be connected to the power grid and exchange power with a the power grid. The hybrid photovoltaic energy storage system includes the off-grid photovoltaic energy storage system and the grid-connected photovoltaic energy storage system.

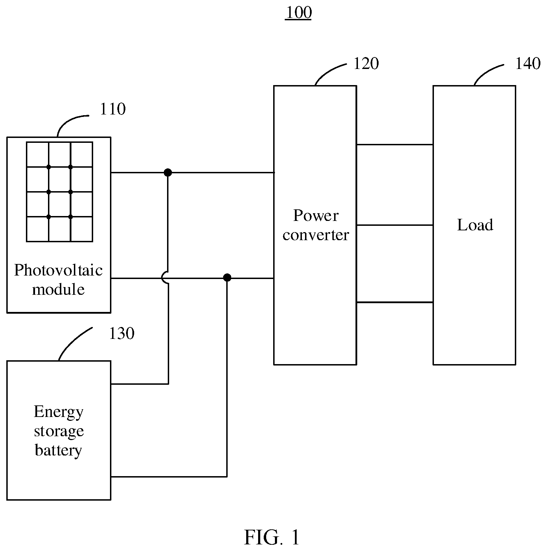

As shown in FIG. 1, an off-grid photovoltaic energy storage system 100 mainly includes a power converter 120 and an energy storage battery 130. The energy storage battery 130 is connected to a direct current end of the power converter 120, and an alternating current end of the power converter 120 is configured to be connected to a load 140. In addition, the direct current end of the power converter 120 may be further configured to connect to a photovoltaic module 110. When energy output by the photovoltaic module 110 is excessively large, the power converter 120 may convert a direct current of the photovoltaic module 110 into an alternating current and output the alternating current to the load 140. Redundant energy of the photovoltaic module 110 may be stored in the energy storage battery 130, to reduce a total output power of an alternating current output end. When the energy output by the photovoltaic module 110 is insufficient, the power converter 120 may convert a direct current of the energy storage battery 130 into an alternating current and output the alternating current to the load 140. The load 140 may be a balanced load or an unbalanced load.

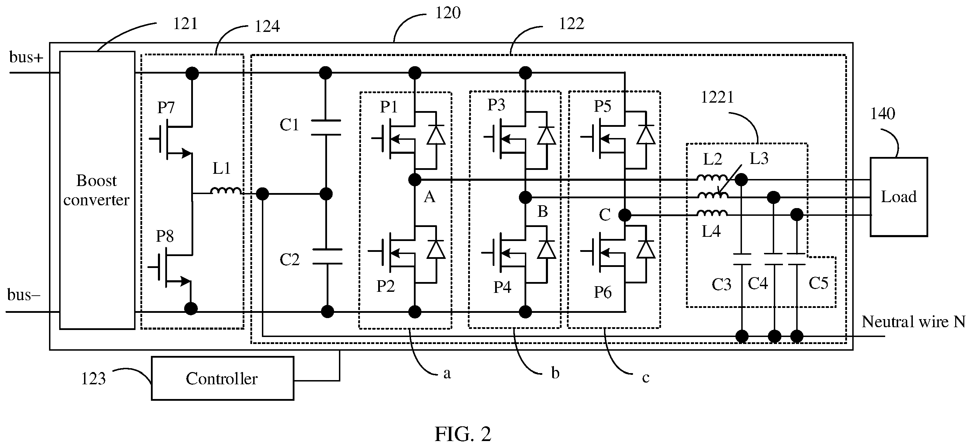

As shown in FIG. 2, in some scenarios, to perform direct current voltage boosting processing on the direct currents input by the photovoltaic module 110 and the energy storage battery 130, and perform inversion processing on direct currents obtained by performing direct current voltage boosting processing, to obtain alternating currents, the power converter 120 usually includes a positive direct current bus+, a negative direct current bus-, a boost converter 121 (boost converter, boost circuit for short), an inverter circuit 122, and a controller 123. A three-phase four-wire inverter circuit 122 is used as an example. The inverter circuit 122 includes a three-phase bridge arm and a neutral wire N. A direct current input end of the three-phase bridge arm may be connected to the photovoltaic module 110 and the energy storage battery 130 via the boost converter 121. Each phase output end of the three-phase bridge arm is connected to the load 140. A bus capacitor is disposed between the positive direct current bus bus+, the negative direct current bus bus-, and the neutral wire N. The bus capacitor includes a first bus capacitor C1 and a second bus capacitor C2. A first end of the first bus capacitor C1 is connected to the positive direct current bus bus+, and a second end of the first bus capacitor C1 is connected to the neutral wire N. A first end of the second bus capacitor C2 is connected to the negative direct current bus bus-, and a second end of the second bus capacitor C2 is connected to the neutral wire N. Each bridge arm in the three-phase bridge arm generally includes two switching transistors connected in series, for example, an insulated gate bipolar transistor (insulate-gate bipolar transistor, IGBT). A connection point of the two switching transistors is connected to one phase output end of the three-phase bridge arm. For example, a bridge arm a, a bridge arm b, and a bridge arm c in the three-phase bridge arm each include two switching transistors that are connected in series between the positive direct current bus bus+ and the negative direct current bus bus- of the power converter 120, and a midpoint of the two switching transistors is connected to one phase output end of the three-phase bridge arm. The bridge arm a includes a switching transistor P1 and a switching transistor P2, and a connection point between the switching transistor P1 and the switching transistor P2 is connected to a phase A output end of the three-phase bridge arm. The bridge arm b includes a switching transistor P3 and a switching transistor P4, and a connection point between the switching transistor P3 and the switching transistor P4 is connected to a phase B output end of the three-phase bridge arm. The bridge arm c includes a switching transistor P5 and a switching transistor P6, and a connection point between the switching transistor P5 and the switching transistor P6 is connected to a phase C output end of the three-phase bridge arm. Each of the switching transistor P1 to the switching transistor P6 is provided with an anti-parallel diode. The controller 123 is connected to the switching transistor P1 to the switching transistor P6, and is configured to control on-off states of the switching transistor P1 to the switching transistor P6 according to a preset modulation scheme. In this embodiment of this application, the switching transistor P1 to the switching transistor P6 are mainly controlled in a sinusoidal pulse width modulation (sinusoidal PWM, SPWM) manner, so that a waveform of an output voltage of the inverter circuit 122 in a single power frequency period is a sine wave. When the waveform of the output voltage is the sine wave, a voltage total harmonic distortion of a load voltage is very low. Therefore, the output voltage of the inverter circuit 122 in the power converter 120 in the off-grid photovoltaic energy storage system 100 is more suitable to be output in the form of the sine wave.

In some scenarios, still as shown in FIG. 2, a balanced bridge arm 124 is further disposed between the boost converter 121 and the inverter circuit 122. The balanced bridge arm 124 includes a switching transistor P7, a switching transistor P8, and an inductor L1. A first electrode of the switching transistor P7 is connected to the positive direct current bus bus+. A first end of the inductor L1 and a first electrode of the switching transistor P8 are connected to a second electrode of the switching transistor P7. A second end of the inductor L1 is connected to the neutral wire N. The controller 123 may also control the switching transistor P7 and the switching transistor P8 on the balanced bridge arm 124. By controlling the switching transistor P7 and the switching transistor P8 on the balanced bridge arm 124, the controller 123 can effectively balance an output current of the inverter circuit 122, and ensure stable running of the load 140. In some scenarios, a filter circuit 1221 is further disposed between each phase output end of the three-phase bridge arm of the inverter circuit 122 and an input end of the corresponding phase of the load 140. The filter circuit 1221 includes an inductor L2, an inductor L3, an inductor L4, a capacitor C_{A}, a capacitor C_{B}, and a capacitor C_{C}. A first end of the inductor L2 is connected to the phase A output end of the three-phase bridge arm, both a first end of the capacitor C_{A} and a phase A input end of the load 140 are connected to a second end of the inductor L2, and a second end of the capacitor C_{A} is connected to the neutral wire N. A first end of the inductor L3 is connected to the phase B output end of the three-phase bridge arm, both a first end of the capacitor C_{B} and a phase B input end of the load 140 are connected to a second end of the inductor L3, and a second end of the capacitor C_{B} is connected to the neutral wire N. A first end of the inductor L4 is connected to the phase C output end of the three-phase bridge arm, both a first end of the capacitor C_{C} and a phase C input end of the load 140 are connected to a second end of the inductor L4, and a second end of the capacitor C_{C} is connected to the neutral wire N. The filter circuit 1221 may perform filtering processing on an alternating current output from each phase output end of the three-phase bridge arm, so that an output voltage may be a better sine wave.

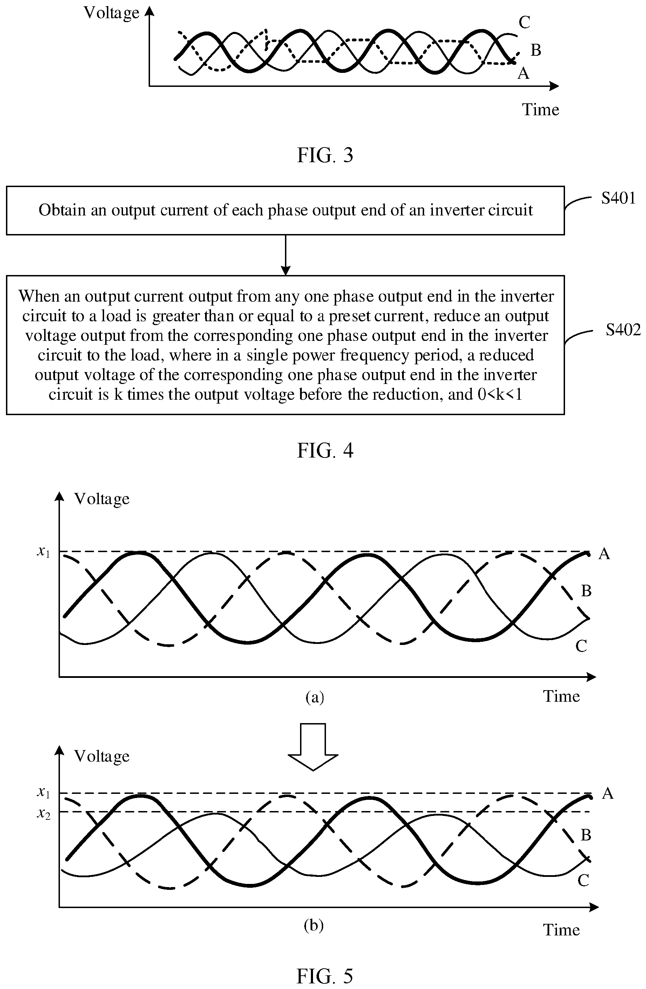

In the off-grid photovoltaic energy storage system 100, an alternating current output by the power converter 120 is mainly used to supply power to the load 140. When the load 140 is excessively high, the inverter circuit 122 in the power converter 120 may cause an excessively high current due to overload operation. To ensure that the output current of the inverter circuit 122 does not exceed a current stress of the inverter circuit 122, a load current needs to be reduced, to perform current limiting on the load 140. As shown in FIG. 3, in an implementation solution, when a waveform of a voltage output by the power converter 120 is a sine wave, current limiting is performed by clipping a peak of a load voltage. For example, when a connection end of the load 140 is connected to a phase B output end of the inverter circuit 122, and a current of the connection end is excessively large, a voltage that is output from the phase B output end of the inverter circuit 122 to the load 140 may be limited based on a set voltage threshold (that is, a peak of a load voltage is clipped), to perform current limiting on the load 140. In a period of time in which an instantaneous voltage value of the output voltage of the phase B output end is greater than the voltage threshold, all voltage values of the output voltage of the phase B output end of the inverter circuit 122 are the voltage threshold, and in another period of time, a waveform of the output voltage is the same as the waveform of the sine wave. Based on this, when the load 140 remains unchanged, current limiting on the load 140 may be implemented by limiting the voltage of the phase B output end. However, because the sine wave has a strong anti-harmonic interference feature, to improve stability of the output voltage and reduce impact of harmonics, a waveform of an output voltage (that is, a load voltage) of the inverter circuit 122 in a single power frequency period is generally a sine wave. If a peak of the load voltage is clipped, an actual waveform of the load voltage in the single power frequency period is approximately a trapezoid wave. In this case, a voltage total harmonic distortion of the load voltage is high, and there is a risk of damaging the load 140.

To resolve the foregoing problem, as shown in FIG. 4, an embodiment of this application provides a control method applied to the power converter 120. The control method may be performed by the controller 123 in the power converter 120. A performing process of the control method is described as follows.

S401: The controller obtains an output current of each phase output end of the inverter circuit.

In an implementation solution, the output current of each phase output end of the inverter circuit 122 may be detected by a current detection circuit disposed at each phase output end of the inverter circuit 122, and then sent to the controller 123. Various common circuits that can implement a current detection function may be selected as the current detection circuit. This is not specifically limited in embodiments of this application.

Certainly, the output current of each phase output end of the inverter circuit 122 may also be detected by a current detection circuit disposed at one phase input end of a load that is correspondingly connected to the phase output end of the inverter circuit 122, and then sent to the controller 123. This is not specifically limited in embodiments of this application.

S402: When an output current output from any one phase output end of the inverter circuit to the load is greater than or equal to a preset current, the controller reduces an output voltage output from the corresponding one phase output end of the inverter circuit to the load. In a single power frequency period, a reduced output voltage of the corresponding one phase output end of the inverter circuit is k times the output voltage before the reduction, and 0<k<1.

In a possible implementation solution, when reducing the output voltage output from the corresponding one phase output end of the inverter circuit to the load, the controller 123 may reduce a control voltage and a control current of a switching transistor on a corresponding one-phase bridge arm in the three-phase bridge arm in the inverter circuit 122, to reduce an output voltage of the inverter circuit 122, thereby reducing an output voltage of the power converter 120. Certainly, either the control voltage or the control current of the switching transistor may be selected based on an actual requirement for adjustment. This is not specifically limited in embodiments of this application. In addition, in the foregoing implementation process, the switching transistor may be a metal-oxide semiconductor field-effect transistor (metal-oxide-semiconductor field-effect transistor, MOSFET), a triode, an insulated gate bipolar transistor (insulated gate bipolar transistor, IGBT), or any other commonly-used transistor. This is not specifically limited in embodiments of this application.

In an example, a ratio of the reduced output voltage of the corresponding one phase output end of the inverter circuit 122 to the output voltage before the reduction is a ratio of a current of the corresponding one phase output end of the inverter circuit 122 before the reduction to a rated output current of the inverter circuit 122. Based on this, the controller 123 may reduce the output voltage of the corresponding one phase output end of the inverter circuit 122 based on the ratio of the output current detected by the current detection circuit to the rated output current of the inverter circuit 122, to adjust the output voltage of the corresponding one phase output end of the inverter circuit more conveniently and quickly. For example, the controller 123 may first calculate a maximum current value *i_{ref1max}* of one phase output end with an excessively large current in a single power frequency period based on a current *i_{ref1}* of the phase output end of the inverter circuit 122 in the single power frequency period. For example, if the single power frequency period of the inverter circuit 122 is 20 ms, the maximum current value *i_{ref1max}* of one phase output end with an excessively large current in the single power frequency period may be calculated in a manner of calculating a maximum value through 20 ms sliding, that is, the maximum current value *i_{ref1max}* of the phase output end of the single power frequency period is calculated from all current values in the single power frequency period every 20 ms. Then, the controller 123 may calculate a target output voltage, namely, the reduced output voltage, based on a maximum current value (that is, a rated output current value *i_{igbtmax}* of the inverter circuit 122) that can be borne by a device, for example, the switching transistor in the inverter circuit 122 and the maximum current value *i_{ref1max}* of one phase output end with an excessively large current in the inverter circuit 122 in the single power frequency period. Then, the controller 123 determines, based on the target output voltage, a control voltage and/or a control current of a switching transistor on each bridge arm in the three-phase bridge arm on the inverter circuit 122. Finally, the inverter circuit 122 is controlled, based on the control voltage and/or the control current, to reduce an output voltage of one-phase bridge arm corresponding to the phase output end. When a maximum current value *i_{ref1max}* of one phase output end of the inverter circuit 122 in a single power frequency period is less than the maximum current value *i_{igbtmax}* that can be borne by the device, for example, the switching transistor in the inverter circuit 122 (that is, *i_{ref1max}<i_{igbtmax}*), the coefficient k may be always 1. In this case, the output voltage of the inverter circuit 122 remains unchanged. When a maximum current value *i_{ref1max}* of one phase output end of the inverter circuit 122 in a single power frequency period reaches the maximum current value that can be borne by the device, for example, the switching transistor in the inverter circuit 122 (that is, *i_{ref1max}*≥*i_{igbtmax}*), the foregoing coefficient k may be determined based on a ratio of the maximum current value *i_{ref1max}* of the phase output end of the single power frequency period to the maximum current value *i_{igbtmax}* (that is, the rated output current of the inverter circuit) that can be borne by the device, for example, the switching transistor in the inverter circuit 122 (that is, the foregoing coefficient k is determined based on the ratio of the current of the corresponding one phase output end of the inverter circuit before the reduction to the rated output current of the inverter circuit). Finally, amplitude limiting is performed on the output current of the inverter circuit 122 based on the coefficient k and the current *i_{ref1}* of one phase output end with an excessively large current in the inverter circuit 122 in the single power frequency period, and/or amplitude limiting is performed on an actual output voltage of the inverter circuit 122 based on the coefficient k and a rated voltage/current output voltage of the inverter circuit 122. The output current of the inverter circuit 122 is *i_{ref}*=*k×i_{ref1},* and the output voltage of the inverter circuit 122 is *u_{mag}*=k×u*_{magref},* where *u_{magref}* represents a peak of the rated voltage of the inverter circuit 122, and *u_{mag}* represents a voltage value of the actual output voltage of the inverter circuit 122.

In the foregoing implementation process, in addition to the maximum current *i_{ref1max}* of the phase output end of the single power frequency period, an average current of the phase output end of the single power frequency period may be selected as the output current of one phase output end with an excessively large current in the inverter circuit 122. This is not specifically limited in embodiments of this application.

In a possible implementation solution, when the coefficient k is calculated, the coefficient k may alternatively be calculated in a hysteresis control manner. For example, when the output current output from one phase output end of the inverter circuit 122 to the load is greater than or equal to the preset current and reaches a specified value (that is, *i_{ref1max}*≥*i_{igbtmax}+*Δ*i*), the coefficient k may be reduced based on a first preset gradient difference, to reduce the output voltage of the inverter circuit 122. Δ*i* is a specified value. The first preset gradient difference may be represented as k1, k2, ..., and kn, and k1>k2>k3>...>kn. In an example, a same value may be selected for each gradient difference in the first preset gradient difference, or a value of each gradient difference may be adjusted based on an actual requirement. This is not specifically limited in embodiments of this application. In addition, during specific implementation, an operator may configure each gradient difference in the first preset gradient difference based on an actual situation of the inverter circuit 122. This is not specifically limited in embodiments of this application. In the foregoing manner, an excessively large fluctuation caused by directly reducing the current output voltage to a final output voltage when the output current output from one phase output end of the inverter circuit 122 to the load is excessively large can be avoided, thereby improving stability of a regulation process.

In a possible implementation solution, when an output current output from any phase output end of the inverter circuit 122 to the load 140 is less than the preset current (that is, *i_{ref1max}<i_{igbtmax}*), the coefficient k is increased based on a second preset gradient difference, to increase the output voltage of the inverter circuit 122. The second preset gradient difference may be represented as k1, k2, ..., and kn, and k1<k2<k3<...<kn. In an example, a same value may be selected for each gradient difference in the second preset gradient difference, or a value of each gradient difference may be adjusted based on an actual requirement. This is not specifically limited in embodiments of this application. In addition, the second preset gradient difference may be the same as the first preset gradient difference, or the second preset gradient difference may be different from the first preset gradient difference. During specific implementation, an operator may also configure the second preset gradient difference based on an actual situation of the inverter circuit 122. This is not specifically limited in embodiments of this application. In addition, a value relationship between values in the second preset gradient difference is not limited to a form in the foregoing example. The operator may perform configuration based on an actual requirement. This is not specifically limited in embodiments of this application.

In a possible implementation solution, to ensure that a load voltage can still support normal running of the load 140 after the output voltage of the inverter circuit 122 is reduced, the coefficient k may also be further limited based on an operating voltage range of the load 140. For example, a value range of k may be [a, 1]. A value of a may be a ratio of a current corresponding to a minimum operating voltage in the operating voltage range of the load 140 to a rated output current of the inverter circuit 122. In the foregoing manner, the reduced output voltage of the corresponding one phase output end of the inverter circuit may be greater than or equal to the minimum operating voltage of the load, to reduce a voltage total harmonic distortion of the load voltage while the load current is reduced. In addition, it may also be ensured that the load 140 can run normally, thereby improving running stability of the load 140.

In an implementation solution, it is assumed that waveforms of output voltages of a phase A output end, a phase B output end, and a phase C output end of the inverter circuit 122 are shown in (a) in FIG. 5 in a normal case. However, at a moment, an output current of the phase C output end of the inverter circuit 122 is greater than or equal to the preset current. After the control method of the power converter 120 provided in this embodiment of this application is used, waveforms of the output voltages of the phase A output end, the phase B output end, and the phase C output end of the inverter circuit 122 are shown in (b) in FIG. 5. It can be learned from (a) and (b) in FIG. 5 that, after the output voltage of the inverter circuit 122 is reduced by using the control method in this embodiment of this application, both the waveform of the output voltage of the phase C output end of the inverter circuit 122 and the waveform of the output voltage before the reduction are sine waves. A difference lies only in that an output voltage *x*₂ of the phase C output end after the reduction in a single power frequency period is k times of an output voltage *x₁* before the reduction. k=*x₂*/*x₁*, and *x₂<x₁.* In this manner, the output voltage of the corresponding one phase output end of the inverter circuit 122 is reduced, and a feature of strong anti-resonance capability of the sine wave can still be maintained. Compared with the existing manner of clipping the peak of the load voltage, in this manner, the voltage total harmonic distortion of the load voltage can be reduced while the load current is reduced.

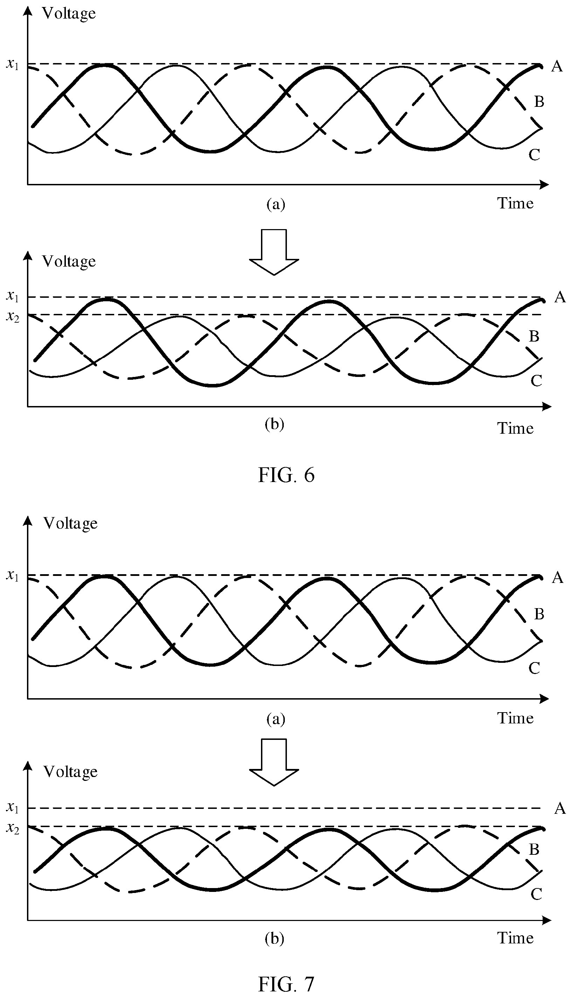

In an implementation solution, when output currents output from any two phase output ends of the inverter circuit to the load are greater than or equal to the preset current, the controller 123 may further reduce output voltages output from the corresponding two phase output ends of the inverter circuit to the load. For example, it is assumed that waveforms of output voltages of a phase A output end, a phase B output end, and a phase C output end of the inverter circuit 122 are shown in (a) in FIG. 6 in a normal case. However, at a moment, both an output current of the phase C output end and an output current of the phase B output end of the inverter circuit 122 are greater than or equal to the preset current. After the control method of the power converter 120 provided in this embodiment of this application is used, waveforms of the output voltages of the phase A output end, the phase B output end, and the phase C output end of the inverter circuit 122 are shown in (b) in FIG. 6. It can be learned from (a) and (b) in FIG. 6 that, after the output voltage of the inverter circuit 122 is reduced by using the control method in this embodiment of this application, both the waveform of the output voltage of the phase C output end of the inverter circuit 122 and the waveform of the output voltage before the reduction are sine waves. A difference lies only in that an output voltage *x*₂ of the phase C output end after the reduction in a single power frequency period is k times of an output voltage x₁ before the reduction. Both the waveform of the output voltage of the phase B output end of the inverter circuit 122 and the waveform of the output voltage before the reduction are sine waves. A difference lies only in that an output voltage *x₂* of the phase B output end after the reduction in a single power frequency period is k times of an output voltage *x₁* before the reduction*.* k*=x2*/*x1,* and *x2<x1.*

In an implementation solution, when output currents output from three phase output ends of the inverter circuit to the load are greater than or equal to the preset current, the controller 123 may further reduce output voltages output from the three phase output ends of the inverter circuit to the load. For example, it is assumed that waveforms of output voltages of a phase A output end, a phase B output end, and a phase C output end of the inverter circuit 122 are shown in (a) in FIG. 7 in a normal case. However, at a moment, all an output current of the phase C output end, an output current of the phase B output end, and an output current of the phase A output end of the inverter circuit 122 are greater than or equal to the preset current. After the control method of the power converter 120 provided in this embodiment of this application is used, waveforms of the output voltages of the phase A output end, the phase B output end, and the phase C output end of the inverter circuit 122 are shown in (b) in FIG. 7. It can be learned from (a) and (b) in FIG. 7 that, after the output voltage of the inverter circuit 122 is reduced by using the control method in this embodiment of this application, both the waveform of the output voltage of the phase C output end of the inverter circuit 122 and the waveform of the output voltage before the reduction are sine waves. A difference lies only in that an output voltage *x₂* of the phase C output end after the reduction in a single power frequency period is k times of an output voltage *x₁* before the reduction. Both the waveform of the output voltage of the phase B output end of the inverter circuit 122 and the waveform of the output voltage before the reduction are sine waves. A difference lies only in that an output voltage *x₂* of the phase B output end after the reduction in a single power frequency period is k times of an output voltage *x₁* before the reduction. k=*x₂*/*x₁*, and *x₂*<*x₁*.

In the foregoing manner, when output currents of a plurality of phase output ends of the inverter circuit 122 are greater than or equal to the preset current, output voltages of the plurality of phase output ends may also be reduced, so that an output voltage of each phase output end of a single power frequency period is reduced without changing a type of a waveform of the output voltage of each phase output end, and a voltage total harmonic distortion of a plurality of load voltages may be reduced while a plurality of load currents are reduced.

In conclusion, embodiments of this application provide the power converter 120, the control method, and the photovoltaic energy storage system 100. The energy storage battery 130 in the photovoltaic energy storage system 100 is connected to the direct current end of the power converter 120, and the alternating current end of the power converter 120 is connected to the load 140. The photovoltaic module 110 may be connected to the direct current end of the power converter 120. When the energy output by the photovoltaic module 110 is excessively large, the power converter 120 may convert the direct current of the photovoltaic module 110 into the alternating current and output the alternating current to the load 140, and the photovoltaic module 110 may charge the energy storage battery 130, to reduce the total output power of the alternating current output end. When the energy output by the photovoltaic module 110 is insufficient, the power converter 120 may convert the direct current of the energy storage battery 130 into the alternating current and output the alternating current to the load 140. In addition, according to the control method provided in this embodiment of this application, when the output current output from the any one phase output end of the inverter circuit 122 to the load 140 is greater than or equal to the preset current, the controller 123 may reduce the output voltage of the corresponding one phase output end of the inverter circuit 122, so that the output voltage of the phase output end after the reduction in the single power frequency period is k times the output voltage before the reduction. Based on this, the type of the waveform of the output voltage of the inverter circuit 122 in each power frequency period does not change, so that the type of the waveform of the load voltage does not change either. Therefore, the voltage total harmonic distortion of the load voltage can be reduced while the load current is reduced.

In the several embodiments provided in this application, it should be understood that the disclosed system, circuit, and component may be implemented in other manners. For example, the described component embodiment is merely an example. For example, division into circuits and modules is merely division into logical functions and there may be other division modes during actual application. For example, a plurality of modules or components may be combined or may be integrated to another device, or some characteristics may be ignored or not executed. In addition, the displayed or discussed mutual couplings or direct couplings or communication connections may be implemented through some interfaces. The indirect couplings or communication connections between the devices or modules may be implemented in electronic, mechanical, or other forms.

The modules described as separate components may or may not be physically separate, and components displayed as modules may or may not be physical modules, may be located in one device, or may be distributed on a plurality of devices. Some or all the modules may be selected according to actual needs to achieve the objectives of the solutions of embodiments.

In addition, functional modules in embodiments of this application may be integrated into one device, or each of the modules may exist alone physically, or two or more modules are integrated into one device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power converter, wherein the power converter comprises an inverter circuit and a controller, a direct current end of the inverter circuit is configured to connect to a direct current power supply, an alternating current end of the inverter circuit is configured to supply an alternating current to a load, and the controller is configured to:
in response to an output current output from any one phase output end of the inverter circuit to the load being greater than or equal to a preset current, reduce an output voltage output from the corresponding one phase output end of the inverter circuit to the load, wherein in a single power frequency period, a reduced output voltage of the corresponding one phase output end of the inverter circuit is k times the output voltage before the reduction, and 0<k<1.

2. The power converter according to claim 1, wherein in response to the output current output from the any one phase output end of the inverter circuit to the load being greater than or equal to the preset current, reducing the output voltage output from the corresponding one phase output end of the inverter circuit to the load comprises:
in response to the output current output from the any one phase output end of the inverter circuit to the load being greater than or equal to the preset current and reaches a specified value, reducing, based on a first preset gradient difference, the output voltage output from the corresponding one phase output end of the inverter circuit to the load.

3. The power converter according to claim 1 or 2, wherein the controller is further configured to:
in response to the output current output from the any one phase output end of the inverter circuit to the load being less than the preset current, increase, based on a second preset gradient difference, the output voltage output from the corresponding one phase output end of the inverter circuit to the load.

4. The power converter according to any one of claims 1 to 3, wherein
a ratio of the reduced output voltage of the corresponding one phase output end of the inverter circuit to the output voltage before the reduction is a ratio of a current of the corresponding one phase output end of the inverter circuit before the reduction to a rated output current of the inverter circuit.

5. The power converter according to any one of claims 1 to 4, wherein the reduced output voltage of the corresponding one phase output end of the inverter circuit is greater than or equal to a minimum operating voltage of the load.

6. The power converter according to any one of claims 1 to 5, wherein the controller is further configured to:
in response to output currents output from any two phase output ends of the inverter circuit to the load being greater than or equal to the preset current, reduce output voltages output from the corresponding two phase output ends of the inverter circuit to the load.

7. The power converter according to any one of claims 1 to 6, wherein the controller is further configured to:
in response to all output currents output from three phase output ends of the inverter circuit to the load being greater than or equal to the preset current, reduce output voltages output from the three phase output ends of the inverter circuit to the load.

8. A control method, applied to a power converter, wherein the method comprises:
reducing, when an output current output from any one phase output end of an inverter circuit in the power converter to a load is greater than or equal to a preset current, an output voltage output from the corresponding one phase output end of the inverter circuit to the load, wherein in a single power frequency period, a reduced output voltage of the corresponding one phase output end of the inverter circuit is k times the output voltage before the reduction, and 0<k<1.

9. The method according to claim 8, wherein the reducing, when an output current output from any one phase output end of an inverter circuit in the power converter to a load is greater than or equal to a preset current, an output voltage output from the corresponding one phase output end of the inverter circuit to the load comprises:
when the output current output from the any one phase output end of the inverter circuit to the load is greater than or equal to the preset current and reaches a specified value, reducing, based on a first preset gradient difference, the output voltage output from the corresponding one phase output end of the inverter circuit to the load.

10. The method according to claim 8 or 9, wherein the method further comprises:
when the output current output from the any one phase output end of the inverter circuit to the load is less than the preset current, increasing, based on a second preset gradient difference, the output voltage output from the corresponding one phase output end of the inverter circuit to the load.

11. The method according to any one of claims 8 to 10, wherein
a ratio of the reduced output voltage of the corresponding one phase output end of the inverter circuit to the output voltage before the reduction is a ratio of a current of the corresponding one phase output end of the inverter circuit before the reduction to a rated output current of the inverter circuit.

12. The method according to any one of claims 8 to 11, wherein the reduced output voltage of the corresponding one phase output end of the inverter circuit is greater than or equal to a minimum operating voltage of the load.

13. The method according to any one of claims 8 to 12, wherein the method further comprises:
in response to output currents output from any two phase output ends of the inverter circuit to the load being greater than or equal to the preset current, reducing output voltages output from the corresponding two phase output ends of the inverter circuit to the load.

14. The method according to any one of claims 8 to 13, wherein the method further comprises:
in response to all output currents output from three phase output ends of the inverter circuit to the load being greater than or equal to the preset current, reducing output voltages output from the three phase output ends of the inverter circuit to the load.

15. A photovoltaic energy storage system, comprising an energy storage battery and a power converter, wherein the energy storage battery is connected to a direct current end of the power converter, an alternating current end of the power converter is configured to supply an alternating current to a load, the direct current end of the power converter is further configured to connect to a photovoltaic module, the power converter comprises an inverter circuit and a controller, a direct current end of the inverter circuit is configured to connect to the energy storage battery, and an alternating current end of the inverter circuit is configured to supply an alternating current to the load; and the controller is configured to:
in response to an output current output from any one phase output end of the inverter circuit to the load being greater than or equal to a preset current, reduce an output voltage output from the corresponding one phase output end of the inverter circuit to the load, wherein in a single power frequency period, a reduced output voltage of the corresponding one phase output end of the inverter circuit is k times the output voltage before the reduction, and 0<k<1.
